# EUROPÄISCHE PATENTSCHRIFT

(11) **EP 4 144 615 B1**
(45) Veröffentlichungstag und Bekanntmachung des Hinweises auf die Patenterteilung: **29.10.2025**
(21) Anmeldenummer: 22193352.6
(22) Anmeldetag: 01.09.2022
(51) Int. Cl.: F16H 25/24, F16H 25/20, B62D 1/181

(54) **AKTUATOR, LENKSÄULE FÜR EIN KRAFTFAHRZEUG SOWIE VERFAHREN ZUM HERSTELLEN UND/ODER MONTIEREN EINES AKTUATORS**
ACTUATOR, STEERING COLUMN FOR A MOTOR VEHICLE AND METHOD FOR MANUFACTURING AND / OR MOUNTING AN ACTUATOR
ACTIONNEUR, COLONNE DE DIRECTION POUR UN VÉHICULE AUTOMOBILE, AINSI QUE PROCÉDÉ DE FABRICATION ET/OU DE MONTAGE D'UN ACTIONNEUR

(30) Priorität: 02.09.2021 DE 102021122789
(43) Veröffentlichungstag der Anmeldung: 08.03.2023
(73) Patentinhaber: Oechsler AG, 91522 Ansbach (DE)
(72) Erfinder: Rösel, Andreas, 90451 Nürnberg (DE); Dettenberger, Stefan, 91522 Ansbach (DE)
(74) Vertreter: Canzler & Bergmeier Patentanwälte Partnerschaft mbB

(56) Entgegenhaltungen:
- DE-U- 7 110 486
- GB-A- 1 288 439
- US-A- 4 369 011
- US-A1- 2004 194 570
- US-A1- 2005 252 323

## Beschreibung

Die vorliegende Erfindung betrifft ein Aktuator, insbesondere Lenksäulenaktuator für eine Lenksäule eines Kraftfahrzeugs, mit einem Motor und wenigstens einem vom Motor antreibbaren Schraubengetriebe, das eine Gewindespindel mit einem Außengewinde und eine mit der Gewindespindel korrespondierende Spindelmutter aufweist.

Derartige Aktuatoren werden insbesondere an Lenksäulen von Kraftfahrzeugen für die ergonomische Einstellung einer Position der Lenksäule für einen bestimmten Fahrer des Kraftfahrzeugs vorgesehen. Hierbei kann beispielswiese eine Länge und/oder eine Neigung bzw. Höhe der Lenksäule in dem Kraftfahrzeug eingestellt werden. Eventuell sind mehrere ähnliche oder gleichartige Aktoren an der Lenksäule hierfür angeordnet. Ein Vorteil einer automatisierten bzw. motorgestützten Einstellung der Lenksäulenposition gegenüber einer manuellen Einstellung durch den Fahrer ist beispielsweise die Möglichkeit der Festlegung verschiedener Fahrerprofile.

Beispielsweise offenbart die WO 2019/081081 A1 einen Aktuator mit einem Motor und wenigstens einem vom Motor antreibbaren Schraubengetriebe, das eine Gewindespindel mit einem Außengewinde und eine mit der Gewindespindel korrespondierende Spindelmutter aufweist. Der vorliegenden Erfindung liegt unter anderem die Erkenntnis zu Grunde, dass eine Ausbildung des Aktuators, wie sie aus dem Stand der Technik bekannt ist, zu einer störenden Geräuschentwicklung für den Fahrer eines Kraftfahrzeugs, das mit dem Aktuator ausgerüstet ist, führt. Wird mittels des Aktuators aus dem Stand der Technik die Lenksäule verstellt, kann es nach erfolgter Einstellung der Position der Lenksäule zudem zu ungewollten Bewegungen einer Lenkspindel der Lenksäule und somit des daran angeordneten Lenkrads kommen.

Die US 2004/0194570 A1 offenbart eine elektrisch angetriebene Lenksäulenvorrichtung mit einer Lenksäule, die eine Lenkwelle drehbar hält und in der Lage ist, eine Position des Lenkrades einzustellen, und einem Kraftübertragungsmechanismus zum Übertragen einer Drehantriebskraft eines Elektromotors als eine positionseinstellende Bewegungsantriebskraft auf die Lenksäule, wobei der Kraftübertragungsmechanismus ein Gelenk aufweist, das aus einem kugelförmigen Gelenkelement und einem zylindrischen Gelenkelement aufgebaut ist, in das das kugelförmige Gelenkelement innerhalb eines Antriebskraftübertragungsweges schiebbar eingesetzt ist.

Die US 4,369,011 A offenbart Kugelmuttern, die auf eine Kugelumlaufspindel vorgespannt werden, indem die Muttern relativ zueinander gedreht werden, um benachbarte Endflächen der Muttern miteinander zu verklemmen. Danach werden die Muttern gegen eine relative Drehung gehalten, indem ein Klemmring angezogen wird, der an einer der Muttern befestigt ist und reibschlüssig in die andere eingreift, um deren Drehung zu verhindern.

Aufgabe der vorliegenden Erfindung ist es, einen Aktuator zu schaffen, der die Nachteile bekannter Aktuatoren überwindet und/oder bei dem schnell, konstruktiv einfach und/oder zuverlässig ein Gewindespiel eines Schraubengetriebes des Aktuators einstellbar ist.

Die Aufgabe wird gelöst durch einen Aktuator und eine Lenksäule mit den Merkmalen der unabhängigen Patentansprüche.

Vorgeschlagen wird ein Aktuator, insbesondere ein Aktuator für eine Lenksäule bzw. Lenksäulenaktuator für eine Lenksäule eines Kraftfahrzeugs, mit einem Motor und wenigstens einem vom Motor antreibbaren Schraubengetriebe, das eine Gewindespindel mit einem Außengewinde und eine mit der Gewindespindel korrespondierende Spindelmutter aufweist. Der Motor treibt dabei die Gewindespindel oder die Spindelmutter an. Der angetriebene Bestandteil des Schraubengetriebes, also die Gewindespindel oder die Spindelmutter, kann hierbei als Rotationselement bezeichnet werden. Das Schraubengetriebe dient insbesondere dazu, eine vom Motor erzeugte Rotationsbewegung in eine Translation umzuwandeln, die beispielsweise zur Verstellung einer Lenksäule verwendet werden kann.

Zudem weist die Spindelmutter zwei Einzelmuttern mit einem jeweiligen Innengewinde auf. Die Einzelmuttern sind um eine Spindelachse der Gewindespindel relativ zueinander aus einer Montagestellung in eine Betriebsstellung verdrehbar und in dieser Betriebsstellung fixierbar, so dass ein Gewindespiel zwischen dem Außengewinde der Gewindespindel und den Innengewinden der Einzelmuttern einstellbar ist.

Als Montagestellung ist dabei die Stellung der Einzelmuttern zu verstehen, in der die Einzelmuttern auf die Gewindespindel montiert werden. Als Betriebsstellung ist die Stellung der Einzelmuttern zu verstehen, in der der Aktuator betreibbar ist. In der Betriebsstellung ist die Spindelmutter relativ zur Gewindespindel entlang der Spindelachse translatorisch bewegbar. Das Außengewinde der Gewindespindel und die Innengewinde der Einzelmuttern sind vorzugsweise als Trapezgewinde ausgebildet.

Sowohl das Außengewinde der Gewindespindel als auch die Innengewinde der zwei Einzelmodellen können, beispielsweise fertigungsbedingt, eine unterschiedliche Toleranzlage aufweisen. Hierdurch kann das Gewindespiel resultieren. Ebenso ist es denkbar, dass das Gewindespiel zur einfacheren Montage gewünscht ist. Als Gewindespiel ist dabei der Freiraum zwischen den Gewindeflanken des Außengewindes und des Innengewindes zu verstehen. Beim Verdrehen der zwei Einzelmuttern relativ zueinander werden die jeweiligen Innengewinde mitverdreht.

Die jeweiligen Innengewinde der zwei Einzelmuttern werden zur Verringerung des Gewindespiels entlang der Spindelachse beispielsweise derart zueinander verdreht, dass die Gewindeflanken der Innengewinde an einander entgegengesetzten Gewindeflanken des Außengewindes drücken. Dadurch kann eine ungewollte Bewegung der Gewindespindel oder der Spindelmutter entlang der Spindelachse verhindert werden. Zudem fördert ein geringes Gewindespiel die Laufruhe des Aktuators, wodurch ein homogenerer und/oder geräuschärmerer Betrieb gewährleistet werden kann.

Vorteilhaft ist es, wenn der Aktuator ein Getriebe aufweist. Das Getriebe weist vorzugsweise mehrere Zahnräder auf. Mittels des Getriebes kann die Rotationsbewegung des Motors übersetzt und auf das Schraubengetriebe übertragen werden. Zudem können mehrere der Zahnräder eine Mehrzahl an Abtriebsräder, insbesondere ein erstes Abtriebsrad und ein zweites Abtriebsrad, zum Antreiben einer Mehrzahl an Schraubengetrieben aufweisen. Jede der Mehrzahl an Schraubengetriebe kann eine Spindelmutter gemäß der vorhergehenden und nachfolgenden Beschreibung aufweisen.

Vorteile bringt es mit sich, wenn die erste Einzelmutter als drehbare Einstellmutter und die zweite Einzelmutter als drehfeste Festmutter ausgebildet ist. Zum Einstellen des Gewindespiels ist dadurch lediglich die erste Einzelmutter zu verdrehen. Bei schwer zugänglichen Aktuatoren kann dadurch das Einstellen von einer Seite vereinfacht sein. Zudem kann dadurch der Wartungsaufwand verringert werden, da lediglich die erste Einzelmutter gewartet bzw. nachgestellt werden muss.

Des Weiteren weist die Spindelmutter wenigstens ein Arretierungselement, insbesondere eine Arretierungsschraube, zum Arretieren und/oder Fixieren der beiden Einzelmuttern in der Betriebsstellung auf. Das Arretierungselement ist dabei derart ausgebildet, dass es in der Montagestellung der Spindelmutter das Verdrehen der beiden Einzelmuttern zulässt und in der Betriebsstellung sperrt. Das vorzugsweise als Arretierungsschraube ausgebildete Arretierungselement stellt eine einfache und effektive Fixierung der beiden Einzelmuttern zueinander bereit. Hierbei wird vorzugsweise mittels Flächenpressung des Schraubenkopfs und/oder einer zwischen dem Schraubenkopf und einer der Einzelmuttern angeordneten bzw. eingelegten Scheibe die beiden Einzelmuttern zueinander verspannt. Dadurch sind die beiden Einzelmuttern in der Betriebsstellung zueinander arretiert wodurch eine Verdrehung der beiden Einzelmuttern in der Betriebsstellung relativ zueinander vermieden werden kann.

Zudem ist es vorteilhaft, wenn die Spindelmutter wenigstens eine Einzelmutterführung zum Führen wenigstens einer der Einzelmuttern, insbesondere der Einstellmutter, beim Verdrehen um die Spindelachse aufweist. Das Verdrehen ist hier erneut als Verdrehung wenigstens einer der Einzelmuttern zwischen der Montagestellung und der Betriebsstellung zu verstehen. Die Führung stellt dabei sicher, dass sich die wenigstens eine geführte Einzelmutter, insbesondere die Einstellmutter, gleichmäßig verdreht. Ein Verschieben der geführten Einzelmutter quer zur Spindelachse kann dadurch verhindert und/oder minimiert werden. So kann das Risiko einer ungewollten Schrägstellung der Gewindespindel aufgrund ungleichmäßiger Verdrehung minimiert werden.

Erfindungsgemäß weist wenigstens eine der Einzelmuttern, insbesondere die erste Einzelmutter, ein konzentrisch zur Spindelachse gekrümmtes Langloch auf, durch das sich das Arretierungselement hindurcherstreckt. Wird wenigstens eine der Einzelmuttern, insbesondere die erste Einzelmutter, verdreht, so kann mithilfe des Langlochs die Drehbewegung ausgeglichen werden. Das Arretierungselement kann sich somit während dem Verdrehen von der Montagestellung in die Betriebsstellung durch das Langloch hindurch erstrecken. Das vollständige Entfernen des Arretierungselements ist dabei nicht notwendig. So kann ein zusätzlicher Arbeitsschritt, insbesondere das erneute Anordnen des Arretierungselements an der Spindelmutter, erspart bleiben.

Das Langloch ist zudem konzentrisch zur Spindelachse gekrümmt, so kann die konzentrische Verdrehung der beiden Einzelmuttern zueinander ausgeglichen werden. Zudem ist es von Vorteil, wenn die Einzelmutterführung konzentrisch zur Spindelachse ausgebildet ist, wodurch sowohl die Einzelmutterführung, als auch das konzentrisch zur Spindelachse gekrümmte Langloch eine konzentrische Verdrehung der beiden Einzelmuttern zueinander gewährleisten.

Auch ist es von Vorteil, wenn die beiden Einzelmuttern jeweils wenigstens einen zueinander korrespondierenden Anlagebereich aufweisen, wobei vorzugsweise wenigstens ein erster Anlagebereich der ersten Einzelmutter zumindest teilweise an wenigstens einem zweiten Anlagebereich der zweiten Einzelmutter anliegt. Werden die beiden Einzelmuttern mittels des Arretierungselement, insbesondere der Arretierungsschraube, zueinander arretiert, so werden die jeweiligen Anlagebereiche aneinander angedrückt. Die daraus resultierende Flächenpressung zwischen den Anlagebereichen stellt dabei die Fixierung zueinander sicher. Ein ungewolltes Verdrehen der beiden Einzelmuttern in der Betriebsstellung kann dadurch verhindert werden.

Ebenso bringt es Vorteile mit sich, wenn der wenigstens eine erste Anlagebereich der ersten Einzelmutter als unterbrechungsfreier Ring und/oder um die Spindelachse umlaufend zusammenhängend ausgebildet ist. Der erste Anlagebereich ist dabei vorteilhafterweise als zusammenhängende Anlagefläche ausgebildet.

Auch ist es vorteilhaft, wenn der wenigstens eine zweite Anlagebereich der zweiten Einzelmutter mehrere Teilsegmente umfasst, die durch Ausnehmungen voneinander getrennt sind. Wie bereits beschrieben, sind der erste Anlagebereich und der zweite Anlagebereich korrespondierend zueinander ausgebildet. So kann nach dem Arretieren der beiden Einzelmuttern zueinander in der Betriebsstellung eine ungewollte Verdrehung vermieden werden. Der wenigstens eine erste Anlagebereich der ersten Einzelmutter als unterbrechungsfreier Ring stellt dabei sicher, dass die Anlagebereiche stets aneinander anliegen.

Zudem ist es vorteilhaft, wenn die beiden korrespondierenden Anlagebereiche als normal zur Spindelachse ausgebildete Anlageflächen ausgebildet sind. So liegen die beiden Anlagebereiche beim Verdrehen zwischen der Montagestellung und der Betriebsstellung stets aneinander an.

Ebenso ist es vorteilhaft, wenn das wenigstens eine Arretierungselement, insbesondere im zweiten Anlagebereich, an der zweiten Einzelmutter befestigt ist, wobei vorzugsweise das wenigstens eine als Arretierungsschraube ausgebildete Arretierungselement in ein Schraubloch des wenigstens einen zweiten Anlagebereichs eingeschraubt ist. Dies stellt eine einfache Verbindung bzw. Arretierung zwischen den beiden Einzelmuttern dar. Das wenigstens eine Arretierungselement steht somit relativ zur zweiten Einzelmutter still. Werden die beiden Einzelmuttern relativ zueinander zwischen der Montagestellung und der Betriebsstellung verdreht, so bilden das wenigstens eine Arretierungselement und die zweite Einzelmutter eine Einheit, gegenüber der sich die erste Einzelmutter relativ verdreht. Weist die erste Einzelmutter, wie oben bereits beschrieben, vorteilhafterweise das Langloch auf, so kann die Relativbewegung des Arretierungselements zur ersten Einzelmutter ausgeglichen werden. Das der zweiten Einzelmutter zugeordnete Arretierungselement bewegt sich somit bei einer relativen Verdrehung der beiden Einzelmuttern innerhalb und/oder entlang des Langlochs der ersten Einzelmutter.

Vorteile bringt es zudem mit sich, wenn die Spindelmutter ein Aufnahmeelement umfasst, an dem die beiden Einzelmuttern angeordnet sind, wobei vorzugsweise die erste Einzelmutter mittelbar über die zweite Einzelmutter mit dem Aufnahmeelement verbunden ist. Die erste Einzelmutter ist dabei vorzugsweise mittels des wenigstens einen Arretierungselements mit der zweiten Einzelmutter verbunden. Dadurch kann unabhängig vom Aufnahmeelement das Gewindespiel mittels der beiden Einzelmuttern eingestellt werden.

Des Weiteren ist es vorteilhaft, wenn das Aufnahmeelement vorzugsweise eine Aufnahmeaussparung umfasst, in der die zweite Einzelmutter aufgenommen ist. Die Aufnahmeaussparung kann dabei als konzentrisch verlaufende Aussparung ausgebildet sein.

Ebenso ist es vorteilhaft, wenn die als Festmutter ausgebildete zweite Einzelmutter vorzugsweise drehfest und/oder verschiebefest, insbesondere mittels wenigstens eines in der zumindest einen Ausnehmung angeordneten Verbindungselements, an dem Aufnahmeelement befestigt ist.

Vorteilhaft ist es zudem, wenn die Einzelmutterführung eine Führungsaussparung und einen zu dieser korrespondierenden Führungsfortsatz umfasst, die jeweils an einer der beiden Einzelmuttern ausgebildet sind. Vorzugsweise sind die Führungsaussparung und der korrespondierende Führungsfortsatz dabei derart ausgebildet, dass diese bei der Verdrehung aneinander gleiten.

Auch ist es vorteilhaft, wenn die Führungsaussparung und der korrespondierende Führungsfortsatz rotationssymmetrisch, insbesondere zylindrisch, ausgebildet und/oder konzentrisch zur Spindelachse angeordnet sind. Dadurch kann die konzentrische Führung der beiden Einzelmuttern zueinander gewährleistet werden.

Ebenso bringt es Vorteile mit sich, wenn ein freies Ende des Führungsfortsatzes und ein Boden der Führungsaussparung voneinander beabstandet sind. Dadurch kann gewährleistet werden, dass die beiden Einzelmuttern, insbesondere flächig, an den Anlagebereich aneinander anliegen. Zum Arretieren drückt hierbei vorzugsweise daszumindest eine Arretierungselement die zueinander korrespondierenden Anlagebereiche aneinander. Zudem kann mittels des Abstands zwischen dem freien Ende des Führungsfortsatzes und dem Boden der Führungsaussparung das Einstellen des Gewindespiels vereinfacht werden. Hierdurch wird ein Abstand zwischen dem Innengewinde der ersten Einzelmutter zum Innengewinde der zweiten Einzelmutter gewährleistet, welcher zu einer einfacheren Anpassung an die Gewindespindel dient.

Auch ist es von Vorteil, wenn der Aktuator ein Gehäuse umfasst, wobei die Spindelmutter um die Spindelachse drehbar und translatorisch fixiert innerhalb des Gehäuses oder translatorisch entlang der Spindelachse bewegbar und rotatorisch fixiert außerhalb des Gehäuses angeordnet ist.

Hierbei ist es vorteilhaft, wenn innerhalb des Gehäuses zudem der Motor, das Getriebe und/oder wenigstens ein Abtriebsrad zum Antreiben des Schraubengetriebes angeordnet ist. Ist die Spindelmutter innerhalb des Gehäuses angeordnet, so sind vorzugsweise die Arretierungselemente derart ausgebildet, dass diese durch eine Öffnung des Gehäuses zugänglich sind. Ist die Spindelmutter außerhalb des Gehäuses angeordnet, so ist die Gewindespindel zumindest teilweise innerhalb des Gehäuses angeordnet und/oder steht mit dem Abtriebsrad, welches innerhalb des Gehäuses angeordnet ist, beispielsweise mittels einer Buchse mit einem Formschlusselement, in Wirkverbindung.

Vorteile bringt es mit sich, wenn die Spindelmutter, insbesondere wenigstens eine der Einzelmuttern und/oder das Aufnahmeelement, an einer dem Motor zugewandten Seite eine Abflachung aufweist. Die Spindelmutter bzw. zumindest die Einzelmuttern sind im Wesentlichen rotationssymmetrische ausgestaltet. Mit Hilfe der Abflachung kann rotationssymmetrische Ausgestaltung partiell unterbrochen werden, wodurch zum Motor hin mehr Freiraum generiert werden kann. Dadurch kann gewährleistet werden, dass die Spindelmutter sich entlang der Spindelachse kollisionsfrei bewegen kann. Zudem trägt eine derartige Abflachung zur kompakteren Ausgestaltung des Aktuators bei, da das Schraubengetriebe näher am Motor angeordnet werden kann.

Ebenso bringt es Vorteile mit sich, wenn das Gehäuse im Bereich des Motors eine zur Abflachung der Spindelmutter hin gerichtete Verprägung aufweist. Die Verprägung ist dabei vorzugsweise derart korrespondierend zur Abflachung ausgebildet, dass diese in der Betriebsstellung der Spindelmutter voneinander beabstandet sind und/oder kollisionsfrei aneinander anliegen. Dadurch kann der Aktuator kompakter ausgestaltet werden.

Des Weiteren ist es vorteilhaft, wenn der Aktuator wenigstens ein Spindellager aufweist, das die Gewindespindel an wenigstens einem Endabschnitt lagert. Das Spindellager kann dabei an dem Gehäuse angeordnet und/oder fest mit diesem verbunden sein. In diesem Fall führt die Gewindespindel eine reine Rotationsbewegung aus, wobei die gewünschte Translation durch die Spindelmutter ausgeführt wird. Zusätzlich oder alternativ kann das Spindellager relativ zum Gehäuse verschiebbar ausgebildet sein. In diesem Fall führt die Gewindespindel eine Translationsbewegung aus, wobei die Rotationsbewegung mittels der Spindelmutter einbringbar ist.

Vorteilhaft ist es zudem, wenn das Gehäuse, das wenigstens eine Spindellager und/oder das Aufnahmeelement wenigstens ein Anschlussstück für eine Lenksäule umfasst. Hierdurch kann der Aktuator in einfacher Weise an einer Lenksäule angebracht werden. Das wenigstens eine Anschlussstück weist insbesondere wenigstens eine Bohrung für eine Schraubenverbindung des Aktuators und der Lenksäule auf. Die Form des Anschlussstücks ist beispielsweise an die Form einer Lenksäule angepasst. Insbesondere umfasst das Gehäuse, das wenigstens eine Spindellager und/oder das Aufnahmeelement mehrere Anschlussstücke für eine Lenksäule.

Vorgeschlagen wird auch eine Lenksäule für ein Kraftfahrzeug, mit einer Trageinheit zum Befestigen der Lenksäule an dem Kraftfahrzeug, mit einer Aufnahmeeinheit zum drehbar gelagerten Aufnehmen einer Lenkspindel, und mit wenigstens einem Aktuator zum Verstellen der Aufnahmeeinheit relativ zur Trageinheit. Mittels der Lenkspindel kann eine Lenkbewegung des Kraftfahrzeugs ausgeführt werden kann. An einem Ende der Lenkspindel ist in der Regel ein Lenkrad angeordnet.

Als Trageinheit ist somit eine Einheit zu verstehen, die die Lenksäule am Kraftfahrzeug, insbesondere an dessen Karosserie, befestigt. Die Trageinheit ist dabei vorzugsweise drehfest und/oder verschiebefest am Kraftfahrzeug angeordnet. Die Aufnahmeeinheit ist dabei als Einheit zu verstehen, die die Lenkspindel aufnimmt und mittels des wenigstens einen Aktuators relativ zur Trageinheit verstellbar ist. Weist die Lenksäule eine Mehrzahl an Aktuatoren auf, so kann die Aufnahmeeinheit in eine Mehrzahl an Richtungen, insbesondere in eine Längsrichtung und/oder quer zur Längsrichtung, verstellt werden.

Der Aktuator ist erfindungsgemäß nach der vorangegangenen Beschreibung ausgebildet, wobei die Erfindung in den Ansprüchen definiert ist.

Vorteile bringt es zudem mit sich, wenn die Spindelmutter mittels des Aufnahmeelements, insbesondere drehfest und/oder verschiebefest, an der Trageinheit, an der Aufnahmeeinheit und/oder am Gehäuse angeordnet ist. Die Spindelmutter ist hierfür vorzugsweise mittels des Anschlussstücks des Aufnahmeelements an der Trageinheit, an der Aufnahmeeinheit und/oder am Gehäuse angeordnet.

Ist die Spindelmutter mittels des Aufnahmeelements an der Aufnahmeeinheit angeordnet, so wird die translatorische Bewegung der Spindelmutter auf das Aufnahmeelement übertragen und so relativ zur Gewindespindel verstellt.

Die Spindelmutter ist somit verschiebefest und/oder drehfest an der Aufnahmeeinheit angeordnet. Der Motor des Aktuators versetzt die Gewindespindel in eine Drehbewegung wodurch die Spindelmutter translatorisch verschoben wird. Durch die translatorische Verschiebung der Spindelmutter wird somit die Aufnahmeeinheit mitverschoben.

Ist die Spindelmutter mittels des Aufnahmeelements an der Trageinheit angeordnet, so ist das Gehäuse verschiebefest und/oder drehfest an der Aufnahmeeinheit angeordnet. Auch hier versetzt der Motor die Gewindespindel in Drehbewegung wodurch die Spindelmutter translatorisch verschoben wird. Durch die translatorisch verschiedene Spindelmutter wird auch hier mittels des Gehäuses die Aufnahmeeinheit mitverschoben.

Ist die Spindelmutter mittels des Aufnahmeelements am Gehäuse angeordnet, so ist diese darin drehbar und verschiebefest gelagert. Der Motor versetzt dabei die Spindelmutter in Drehbewegung. Somit wird die Gewindespindel translatorisch verschoben. Die Gewindespindel ist bei dieser Anordnung mittels wenigstens einem Spindellager verschiebefest und/oder drehfest an der Aufnahmeeinheit und/oder an der Trageinheit angeordnet. Ist das Spindellager an der Aufnahmeeinheit angeordnet, so ist das Gehäuse mit der Spindelmutter an der Trageinheit angeordnet. Ist das Spindellager an der Trageinheit angeordnet, so ist das Gehäuse mit der Spindelmutter an der Aufnahmeeinheit angeordnet. So können die Trageinheit und die Aufnahmeeinheit relativ zueinander verstellt werden.

Ferner wird ein Verfahren zum Herstellen und/oder Montieren eines Aktuators, vorzugsweise eines Lenksäulenaktuator für eine Lenksäule eines Kraftfahrzeugs, das folgende Schritte umfasst: Montieren einer Spindelmutter in einer Montagestellung auf einer Gewindespindel, Einstellen des Gewindespiels des Schraubengetriebes durch Verdrehen wenigstens einer Einzelmutter der Spindelmutter von einer Montagestellung in eine Betriebsstellung, und Fixieren der Spindelmutter in der Betriebsstellung.

Der Aktuator ist vorzugsweise gemäß der vorangegangenen Beschreibung ausgebildet.

Ebenso bringt es Vorteile mit sich, wenn vor, während und/oder nach dem Fixieren der Spindelmutter in der Betriebsstellung an wenigstens einer der Einzelmuttern und/oder an einem Aufnahmeelement, insbesondere im Bereich des Motors, eine Abflachung eingebracht, insbesondere gefräst, wird.

Weitere Vorteile der Erfindung sind in den nachfolgenden Ausführungsbeispielen beschrieben. Es zeigen:
- **Figur 1**: eine schematische, teilweise geschnittene Darstellung einer Lenksäule mit einem Aktuator gemäß einem Ausführungsbeispiel,
- **Figur 2**: eine schematische perspektivische Darstellung einer Spindelmutter gemäß einem alternativen Ausführungsbeispiel,
- **Figur 3**: eine schematische Vorderansicht einer Spindelmutter gemäß einem Ausführungsbeispiel ähnlich der Figur 2,
- **Figur 4a**: einen schematischen Schnitt IV einer Spindelmutter gemäß einem Ausführungsbeispiel ähnlich der Figur 2 und 3,
- **Figur 4b**: den schematischen Schnitt IV der Figur 4 in einer explosionszeichnungsartigen Darstellung,
- **Figur 5**: eine schematische Schnittansicht eines ersten weiteren Ausführungsbeispiels eines Aktuators,
- **Figur 6**: den Aktuator aus Figur 5 mit einer Gewindespindel,
- **Figur 7**: eine schematische Schnittansicht eines zweiten weiteren Ausführungsbeispiels des Aktuators,
- **Figur 8**: eine schematische Schnittansicht eines dritten weiteren Ausführungsbeispiels des Aktuators,
- **Figur 9**: eine schematische Schnittansicht eines vierten weiteren Ausführungsbeispiels des Aktuators, und
- **Figur 10**: eine vergrößerte Ansicht des Rotationselements in der Darstellung der vorangegangenen Figuren 5 - 10.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

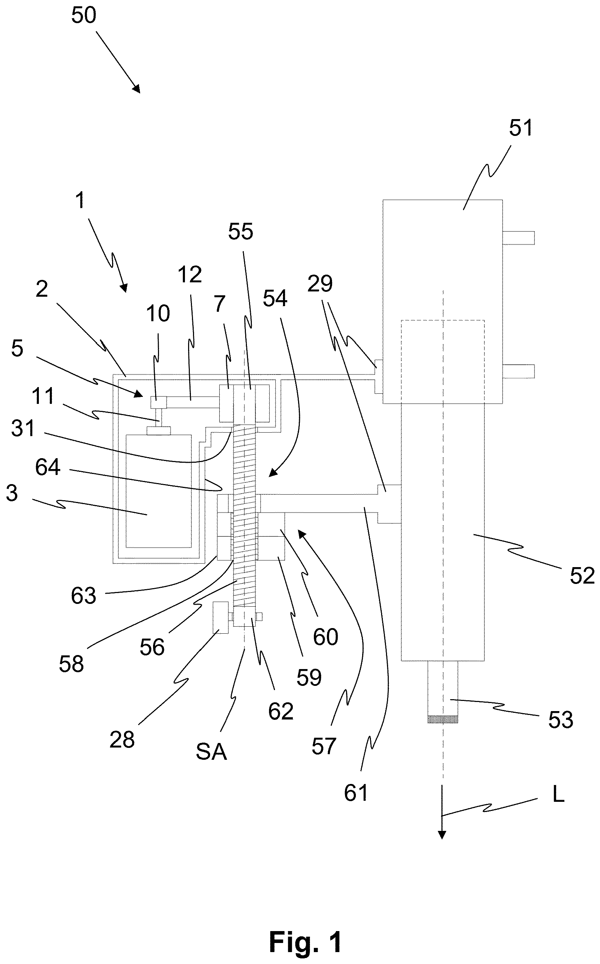

Figur 1 zeigt eine schematische, teilweise geschnittene Darstellung einer Lenksäule 50 mit einem Aktuator 1 gemäß einem Ausführungsbeispiel. Für eine übersichtlichere Darstellung wurde hierbei auf die Darstellung der Schnittkanten verzichtet. Die Lenksäule 50 weist im gezeigten Ausführungsbeispiel zusätzlich zum Aktuator 1 eine Trageinheit 51 zum Befestigen der Lenksäule 50 an einem Kraftfahrzeug und eine Aufnahmeeinheit 52 zum drehbar gelagerten Aufnehmen einer Lenkspindel 53 auf. An einem Ende der Lenkspindel 53 ist in der Regel ein Lenkrad angeordnet, welches beim Verstellen der Aufnahmeeinheit 52 mitverstellt wird.

Der Aktuator 1 ist derart ausgebildet, dass er die Aufnahmeeinheit 52 relativ zur Trageinheit 51 verstellen kann. Im gezeigten Ausführungsbeispiel ist lediglich der eine Aktuator 1 zum Stellen der Aufnahmeeinheit 52 in eine Längsrichtung L angeordnet. Zusätzlich oder alternativ kann die Lenksäule 50 wenigstens einen Aktuator 1 zum Stellen der Aufnahmeeinheit 52 in eine weitere Richtung, insbesondere quer zur Längsrichtung **L,** aufweisen.

Der Aktuator 1 umfasst einen Motor 3 und wenigstens ein vom Motor 3 antreibbares Schraubengetriebe 54. Das Schraubengetriebe 54 umfasst dabei eine Gewindespindel 55 mit einem Außengewinde 56 und eine mit der Gewindespindel 55 korrespondierende Spindelmutter 57. Im gezeigten Ausführungsbeispiel ist die Gewindespindel 55 antreibbar, wodurch sich diese beim Antreiben um eine Spindelachse SA dreht.

Im gezeigten Ausführungsbeispiel weist der Aktuator 1 zudem ein Getriebe 5 zum Übersetzen der Drehbewegung des Motors 3 hin zum Schraubengetriebe 54. Hierfür weist das Getriebe 5 ein erstes Zahnrad 10, das mit einer Abtriebswelle 11 des Motors 3 verbunden ist, ein zweites Zahnrad 12 und ein Abtriebsrad 7 auf. Das Abtriebsrad 7 treibt hierbei die Gewindespindel 55 an. Zusätzlich oder alternativ ist es vorstellbar, dass die Gewindespindel 55 unmittelbar durch das erste Zahnrad 10, die Abtriebswelle 11 oder das zweite Zahnrad 12 angetrieben wird.

Des Weiteren umfasst der Aktuator 1 ein Gehäuse 2. Der Motor 3 und das Getriebe 5 sind hierbei zumindest teilweise innerhalb des Gehäuses 2 angeordnet. Das Schraubengetriebe 54 steht dabei mit dem Getriebe 5 in Wirkverbindung. Im gezeigten Ausführungsbeispiel treibt, wie bereits erwähnt, das Abtriebsrad 7 die Gewindespindel 55 an. Hierfür ragt die Gewindespindel 55 durch eine Öffnung 31 in das Gehäuse 2 hinein. Zur drehbaren Lagerung ist die Gewindespindel 55 an wenigstens einem Endabschnitt 62 mittels wenigstens einen Spindellagers 28 gelagert. Im gezeigten Ausführungsbeispiel ist das Spindellager 28 unabhängig vom Gehäuse 2 angeordnet. Ebenfalls ist es denkbar, dass das Spindellager 28 am Gehäuse angeordnet ist. Zusätzlich oder alternativ kann ein weiteres Spindellager 28 innerhalb des Gehäuses 2, insbesondere am Abtriebsrad 7, angeordnet sein. Der Motor 3 und/oder das Getriebe 5 kann zudem mittelbar und/oder unmittelbar am Gehäuse 2 aufgenommen und/oder gelagert sein.

Die Spindelmutter 57 umfasst zwei Einzelmuttern 59, 60 die jeweils ein Innengewinde 58 aufweisen. Das Außengewinde 56 der Gewindespindel 55 steht hierbei mit den jeweiligen Innengewinde 58 der Einzelmuttern 59, 60 in Eingriff. So kann die Rotationsbewegung der Gewindespindel 55 in eine translatorische Bewegung der Spindelmutter 57 entlang der Spindelachse SA übersetzt werden. Die erste Einzelmutter 59 ist dabei mittelbar über die zweite Einzelmutter 60 an einem Aufnahmeelement 61 der Spindelmutter 57 angeordnet.

Die beiden Einzelmuttern 59, 60 sind um die Spindelachse SA der Gewindespindel 55 relativ zueinander aus einer Montagestellung in eine Betriebsstellung verdrehbar und in dieser Betriebsstellung fixierbar. Hierdurch kann das Gewindespiel zwischen dem Außengewinde 56 der Gewindespindel 55 und den Innengewinden 58 der Einzelmuttern 59,60 eingestellt werden. Im gezeigten Ausführungsbeispiel sind die Spindelmutter 57 mit den Einzelmuttern 59, 60 bereits in einer Betriebsstellung dargestellt. Die Wirkung der Verdrehung der beiden Einzelmuttern relativ zueinander wird in den nachfolgenden Figuren detaillierter beschrieben.

Wie bereits beschrieben, wird die Rotationsbewegung der Gewindespindel 55 in eine translatorische Bewegung der Spindelmutter 57 übersetzt. Das Gehäuse 2 ist mittels eines Anschlussstücks 29 drehfest und verschiebefest an der Trageinheit 51 angeordnet. Darüber hinaus ist das Spindellager 28 drehfest und verschiebefest am Gehäuse 2 und/oder an der Trageinheit 51 ausgebildet. Die Spindelmutter 57 ist mittels eines Anschlussstücks 29 drehfest und verschiebefest an der Aufnahmeeinheit 52 angeordnet. Wird also in der Betriebsstellung die Spindelmutter 57 relativ zur Gewindespindel 55 translatorisch entlang der Spindelachse SA bewegt, so bewegt sich die Aufnahmeeinheit 52 relativ zur Trageinheit 51 in Längsrichtung L. Dadurch wird die Lenkspindel 53 und das daran angeordnete Lenkrad verstellt.

Des Weiteren weisen die Spindelmutter 57 eine Abflachung 63 und das Gehäuse 2 eine Verprägung 64 auf. Die Abflachung 63 der Spindelmutter 57 und die Verprägung 64 des Gehäuses 2 stellen dabei sicher, dass die Spindelmutter 57 kollisionsfrei translatorisch bewegbar ist. Da der Motor 3 und das Schraubengetriebe 54 an der gleichen Seite des Getriebes 5 angeordnet ist, kann durch die Abflachung 63 und die Verprägung 64 der Aktuator 1 möglichst kompakt gestaltet sein.

Durch die Einstellbarkeit des Gewindespiels zwischen der Außenverzahnung 56 der Gewindespindel 55 und der Innenverzahnungen 58 der Einzelmuttern 59, 60 kann auch das Spiel innerhalb der Lenksäule 50 eingestellt werden. Wird das Gewindespiel entlang der Spindelachse SA minimiert, so verringert sich gleichzeitig das Spiel der Lenkspindel 53 in Längsrichtung L.

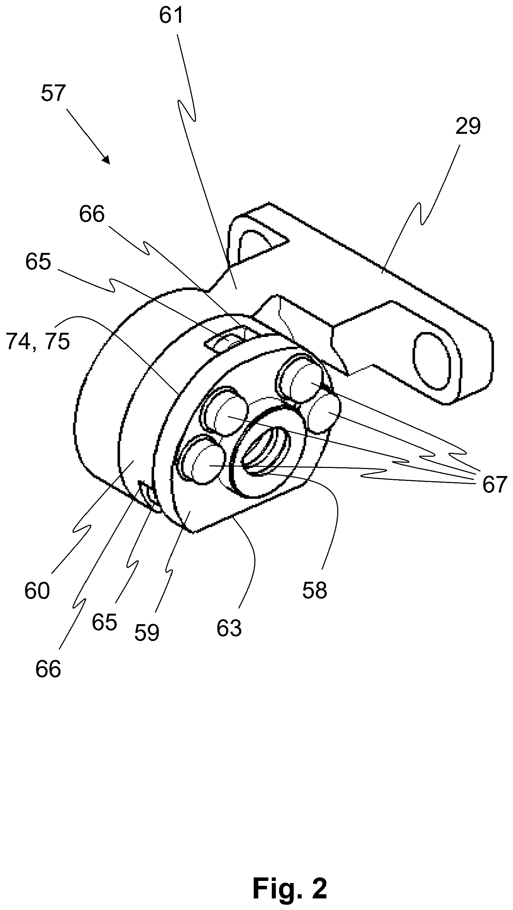

Figur 2 zeigt eine schematische perspektivische Darstellung einer Spindelmutter 57 gemäß einem alternativen Ausführungsbeispiel. Die hier dargestellte Spindelmutter 57 kann beispielsweise in einem Aktuator 1 und/oder in einer Lenksäule 50 gemäß dem Ausführungsbeispiel der Figur 1 zur Verwendung kommen. Ebenfalls ist es vorstellbar, dass die Spindelmutter 57 innerhalb eines Gehäuses 2 gemäß Figur 1 angeordnet ist und die Gewindespindel 55 translatorisch antreibt.

Die Spindelmutter 57 des Ausführungsbeispiels der Figur 2 weist ähnlich zum Ausführungsbeispiel der Figur 1 ein Aufnahmeelement 61 mit einem Anschlussstück 29 auf. An dem Aufnahmeelement 61 ist unmittelbar die zweite Einzelmutter 60 angeordnet. An dem Aufnahmeelement 61 ist die erste Einzelmutter 59 mittelbar über die zweite Einzelmutter 60 angeordnet. Jede der Einzelmuttern 59, 60 weist ein Innengewinde 58 zum Aufnehmen einer Gewindespindel 55 gemäß der Figur 1 auf.

Im gezeigten Ausführungsbeispiel ist die zweite Einzelmutter 60 als drehfeste Festmutter am Aufnahmeelement 61 angeordnet. Hierfür weist die Spindelmutter 57 wenigstens ein Verbindungselement 65 auf, mittels welchem die zweite Einzelmutter 60 am Aufnahmeelement 61 verbunden ist. Im dargestellten Ausführungsbeispiel sind wenigstens zwei dieser Verbindungselemente 65 in jeweils einer Ausnehmung 66 der zweiten Einzelmutter 60 angeordnet. An die jeweilige Ausnehmung 66, die vorzugsweise zur Aufnahme eines Kopfes, insbesondere Schraubenkopfes, des Verbindungselements 65 vorgesehen ist, schließt sich in der zweiten Einzelmutter 60 eine, insbesondere gewindefreie, Durchgangsbohrung an. Vorzugsweise schließt sich an diese Durchgangsbohrung eine Gewindebohrung des Aufnahmeelements 61 an, in die das Verbindungselement 65 eingeschraubt ist. Ebenso ist es vorstellbar, dass lediglich ein Verbindungselement 65 in einer Ausnehmung 66 oder eine Mehrzahl von Verbindungselementen 60 einer Mehrzahl von Ausnehmungen 66 angeordnet sind. Die Verbindungselemente 65 sind hierbei als Verbindungsschrauben ausgebildet.

Die erste Einzelmutter 59 ist mittels wenigstens einem Arretierungselement 67 an der zweiten Einzelmutter 60 angeordnet. Im gezeigten Ausführungsbeispiel sind beispielhaft vier Arretierungselemente 67 zum Arretieren der ersten Einzelmutter 59 zur zweiten Einzelmutter 60 angeordnet. Die Arretierungselemente 67 sind hierbei als Arretierungsschraube ausgebildet. Die Arretierungselemente 67 sind hierbei derart ausgebildet, dass sie nach einer Verdrehung der ersten Einzelmutter 59 als Einstellmutter aus einer Montagestellung in die Betriebsstellung die erste Einzelmutter 59 relativ zur zweiten Einzelmutter 60 arretieren bzw. fixieren kann. Dies wird in den nachfolgenden Figuren näher erläutert.

Ähnlich zum Ausführungsbeispiel der Figur 1 weist auch die Spindelmutter 57 der Figur 2 eine Abflachung 63 auf. Die im Wesentlichen rotationssymmetrisch gestalteten Einzelmuttern 59, 60 sind dabei an einer Seite durch die Abflachung 63 abgeflacht. Diese Abflachung 63 kann beispielsweise nach erfolgter Verbindung des Aufnahmeelements 61 mit den beiden Einzelmuttern 59, 60 gebildet werden. Dadurch kann die Abflachung 63 als konstante Fläche ausgebildet werden, obwohl eine Verdrehung der ersten Einzelmutter 59 als Einstellmutter zur Spielreduzierung notwendig ist.

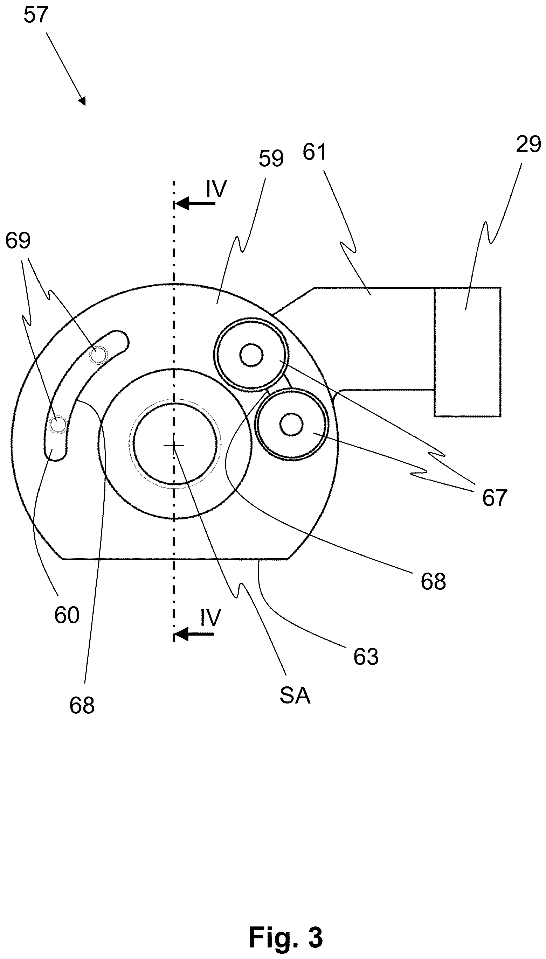

In Figur 3 ist eine schematische Vorderansicht einer Spindelmutter 57 gemäß einem Ausführungsbeispiel ähnlich der Figur 2 gezeigt. Im Gegensatz zum Ausführungsbeispiel der Figur 2 sind im Ausführungsbeispiel der Figur 3 zwei der Arretierungselemente 67 entfernt, um eine bessere Darstellung der ersten Einzelmutter 59, insbesondere als Einstellmutter, und dessen Befestigung und/oder Arretierung zur zweiten Einzelmutter 60, insbesondere als Festmutter, zu gewährleisten.

Die erste Einzelmutter 59 weist wenigstens ein Langloch 68 auf. Im gezeigten Ausführungsbeispiel sind für die vier Arretierungselemente 67 von denen für eine übersichtlichere Darstellung lediglich zwei dargestellt sind, zwei Langlöcher 68 in der ersten Einzelmutter 59 angeordnet. Jeweils zwei Arretierungselemente 67 erstrecken sich somit durch ein gemeinsames Langloch 68. Alternativ ist es vorstellbar, dass jedem Arretierungselement 67 jeweils ein Langloch 68 oder allen Arretierungselementen 67 ein Langloch 68 zugeordnet ist. Die beiden Langlöcher 68 sind zudem konzentrisch zur Spindelachse SA gekrümmt ausgebildet. So kann bei einer Verdrehung der ersten Einzelmutter 59 relativ zur zweiten Einzelmutter 60 sich das wenigstens eine Arretierungselement 67 innerhalb des jeweiligen Langlochs 68 bewegen.

Das Arretierungselement 67 kann als Arretierungsschraube ausgebildet sein. Zum Arretieren der beiden Einzelmuttern 59, 60 zueinander ist die Arretierungsschraube in ein Schraubloch 69 der zweiten Einzelmutter 60 eingeschraubt. Die Arretierungsschraube steht somit beim Verdrehen der ersten Einzelmutter 59 relativ zur zweiten Einzelmutter 60 still.

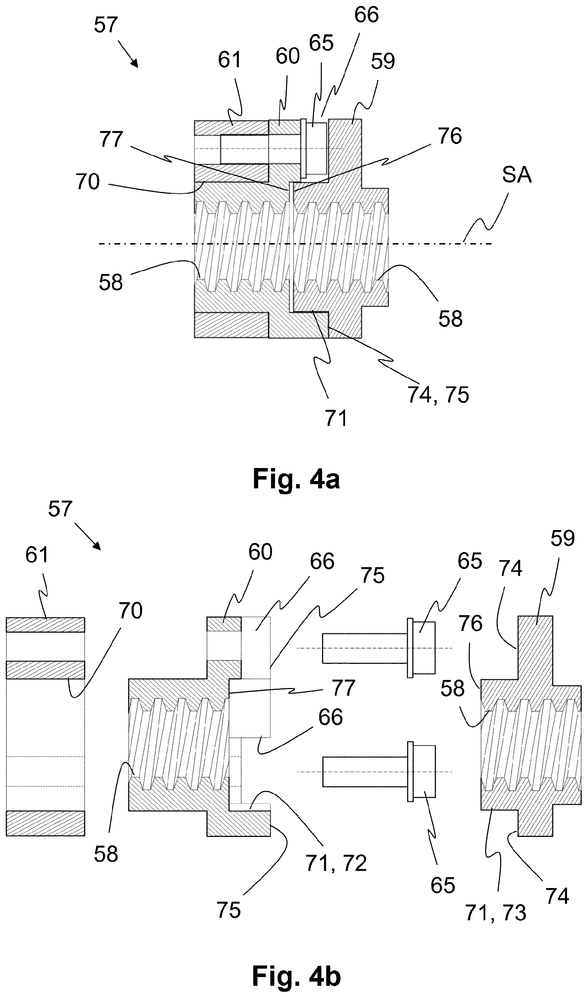

Figur 4a und 4b zeigen jeweils einen schematischen Schnitt IV einer Spindelmutter 57 gemäß einem Ausführungsbeispiel ähnlich der Figur 2 und 3. In Figur 4a ist die Spindelmutter 57 in zusammengebauter Form dargestellt. Figur 4b zeigt eine explosionszeichnungsartige Darstellung, wobei hier die einzelnen Bestandteile voneinander entfernt dargestellt sind. Auch die hier dargestellte Spindelmutter 57 kann beispielsweise in einem Aktuator 1 und/oder in einer Lenksäule 50 gemäß dem Ausführungsbeispiel der Figur 1 zur Verwendung kommen. Ebenfalls ist es vorstellbar, dass die Spindelmutter 57 innerhalb eines Gehäuses 2 gemäß Figur 1 angeordnet ist und die Gewindespindel 55 translatorisch antreibt.

Ähnlich zu den vorangegangenen Figuren ist auch hier die erste Einzelmutter 59 als Einstellmutter und die zweite Einzelmutter 60 als Festmutter ausgebildet. Die zweite Einzelmutter 60 ist mittels des Verbindungselements 65 am Aufnahmeelement 61, insbesondere drehfest und/oder verschiebefest, angeordnet. Zum Aufnehmen der zweiten Einzelmutter 60 weist das Aufnahmeelement 61 eine Aufnahmeaussparung 70 auf.

Die erste Einzelmutter 59 ist mittels einer Einzelmutterführung 71 beim Verdrehen relativ zur zweiten Einzelmutter 60 geführt. Die Einzelmutterführung 71 ist hierbei aus einer Führungsaussparung 72 und einem Führungsfortsatz 73 gebildet. Die Führungsaussparung 72 ist hierbei an der zweiten Einzelmutter 60 angeordnet. Der Führungsfortsatz 73 ist an der ersten Einzelmutter 59 angeordnet.

Wird die erste Einzelmutter 59 in die zweite Einzelmutter 60 eingesteckt, so wird sie entlang der Einzelmutterführung 71 geführt, bis jeweils wenigstens ein korrespondierender Anlagebereich 74, 75 jeder der Einzelmuttern 59, 60 aneinander anliegen. Der erste Anlagebereich 74 der ersten Einzelmutter 59 liegt im zusammen gebauten Zustand, wie in Figur 4a dargestellt, am zweiten Anlagebereich 75 der zweiten Einzelmutter 60 an. Der erste Anlagebereich 74 ist dabei als unterbrechungsfreier Ring bzw. zusammenhängend ausgebildet. Der zweite Anlagebereich 75 umfasst hingegen mehrere Teilsegmente, die durch die Ausnehmungen 66 voneinander getrennt sind.

Liegen die beiden Anlagebereiche 74, 75, wie in der Figur 4a gezeigt, aneinander an, so wird die Spindelmutter 57 in die Betriebsstellung gebracht und/oder fixiert. Sowohl in der Betriebsstellung, als auch in der Montagestellung liegen die Anlagebereiche 74, 75 vorteilhafterweise aneinander an. Lediglich die Innengewinde 58 der beiden Einzelmuttern 59, 60 werden durch die Verdrehung um die Spindelachse SA derart zueinander verdreht, dass ein Gewindespiel zu der Gewindespindel 55, wie sie in der Figur 1 dargestellt ist, einstellbar ist. Liegen die Anlagebereiche 74, 75 aneinander an, so sind ein freies Ende 76 des Führungsfortsatzes 73 und ein Boden 77, wie in der Figur 4a dargestellt, voneinander beabstandet.

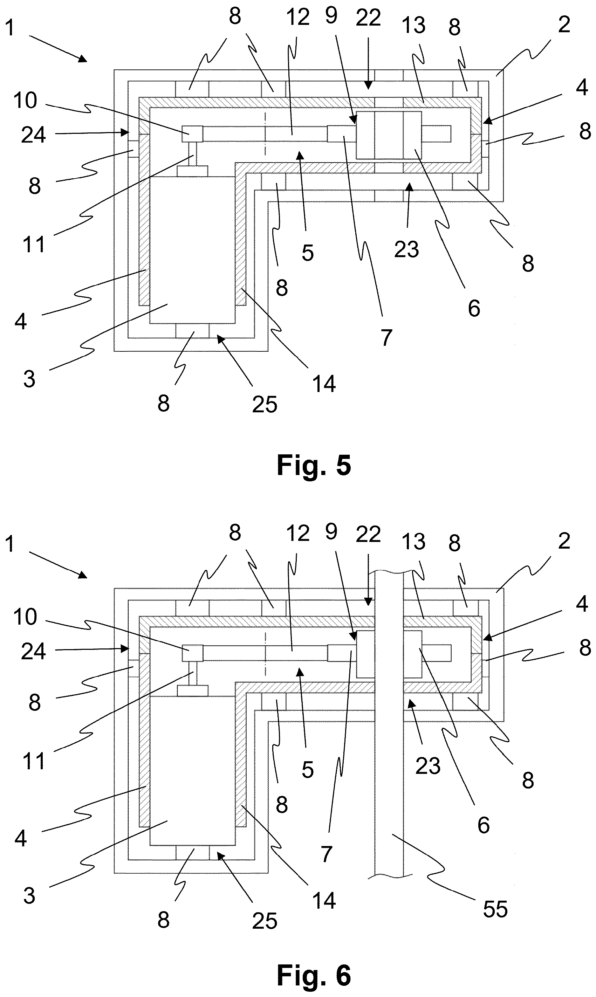

In den nachfolgenden Figuren 5 bis 10 werden weitere Ausführungsbeispiele von Aktuatoren 1 beschrieben. Das hierin als Rotationselement 6, 32, 33 benannte Element ist entweder als Gewindespindel 55 oder als Spindelmutter 57 ausgebildet. Die in den nachfolgenden Figuren gezeigte Spindelmutter 57 kann hierbei gemäß der vorangegangenen Beschreibung ausgebildet sein.

Ist das Rotationselement 6, 32, 33 als Gewindespindel 55 ausgebildet, so kann eine Spindelmutter 57 gemäß der vorangegangenen Beschreibung mit dieser in Wirkverbindung stehen.

Figur 5 zeigt in einer schematischen Schnittansicht einen Aktuator 1 gemäß einem ersten weiteren Ausführungsbeispiel, insbesondere für die Verstellung einer Lenksäule 50. Der Aktuator 1 umfasst ein Gehäuse 2. Angetrieben wird der Aktuator 1 durch einen Motor 3, der in diesem Ausführungsbeispiel zumindest teilweise an einen Träger 4 gelagert ist. Über ein Getriebe 5 ist der Motor 3 mit einem Rotationselement 6 gekoppelt. Das Getriebe 5 umfasst hierzu ein insbesondere außen verzahntes Abtriebsrad 7, das drehfest mit dem Rotationselement 6 verbunden ist. Der Motor 3, das Getriebe 5 und insbesondere das Abtriebsrad 7 wirken derart zusammen, dass das Rotationselement 6 von dem Motor 3 angetrieben wird.

Der Aktuator 1 zeichnet sich dadurch aus, dass der Träger 4 innerhalb des Gehäuses 2 mittels mehreren elastischen Entkopplungselementen 8 von dem Gehäuse 2 akustisch entkoppelt gelagert ist. Der Übersichtlichkeit halber ist in dieser Darstellung und auch in den folgenden Darstellungen nur der Träger 4 schraffierten dargestellt. Es handelt sich dennoch um einen Schnitt durch den Aktuator 1 über die gesamte Fläche.

Das Abtriebsrad 7 weist eine Aussparung 9 auf, in der das Rotationselement 6 angeordnet ist. Das Rotationselement 6 ist in diesem Ausführungsbeispiel als Spindelmutter 57 ausgebildet. Das Rotationselement 6 weist insbesondere ein nicht dargestelltes Innengewinde 58, das insbesondere als Trapezgewinde ausgebildet ist, auf. Das Getriebe 5 weist in diesem Ausführungsbeispiel ein erstes Zahnrad 10 auf, das an einer Abtriebswelle 11 des Motors 3 angeordnet ist. Über ein zweites Zahnrad 12 wird ein vom Motor 3 erzeugtes Drehmoment an das Abtriebsrad 7 vermittelt. Das erste Zahnrad 10, das zweite Zahnrad 12 und das Abtriebsrad 7 weisen insbesondere eine Außenverzahnung auf, über die formschlüssig ein Drehmoment übertragen wird. Die Außenverzahnung kann als Gerad- oder Schrägverzahnung ausgebildet sein.

In Figur 6 ist das gleiche Ausführungsbeispiel des Aktuators 1 dargestellt, wobei hier zusätzlich eine Gewindespindel 55 in dem Rotationselement 6 angeordnet ist. Die Gewindespindel 55 weist insbesondere ein nicht dargestelltes und beispielsweise als Trapezgewinde ausgebildetes Außengewinde 56 auf. Durch die Rotation das als Spindelmutter 57 ausgebildeten Rotationselements 6 wird eine Translationsbewegung der Gewindespindel 55 ausgelöst, womit beispielsweise die Verstellung einer Lenksäule 50 verursacht werden kann. Das Rotationselement 6 ist beispielsweise durch Pressfügen in das Abtriebsrad 7 gefügt.

Der Träger 4 ist mehrteilig ausgebildet, mit einem ersten Trägerelement 13 und einem zweiten Trägerelement 14. Das erste Trägerelement 13 und das zweite Trägerelement 14 sind beispielsweise durch Ultraschallschweißen oder nicht dargestellte Kunststoffpassstifte miteinander verbunden. Der Motor 3 ist zumindest teilweise am Träger 4 gelagert, in diesem Ausführungsbeispiel ist er am zweiten Trägerelement 14 gelagert. Einen weiteren Lagerpunkt hat der Motor 3 am Gehäuse 2, wobei zwischen dem Motor 3 und dem Gehäuse 2 ein Entkopplungselement 8 angeordnet ist. Das Getriebe 5 ist vollständig innerhalb des Trägers 4 gelagert, wobei eine diesbezügliche deutlichere Darstellung in den weiteren Figuren folgt.

In diesem Ausführungsbeispiel ist zumindest ein erstes Entkopplungselement 8 an einer dem Motor 3 abgewandten ersten Trägerstirnseite 22, zumindest ein zweites Entkopplungselement 8 an einer dem Motor 3 zugewandten zweiten Trägerstirnseite 23, zumindest ein drittes Entkopplungselement 8 an einer Trägermantelfläche 24 und zumindest ein viertes Entkopplungselement 8 an einem dem Träger 4 abgewandten Ende 25 des Motors 3 angeordnet.

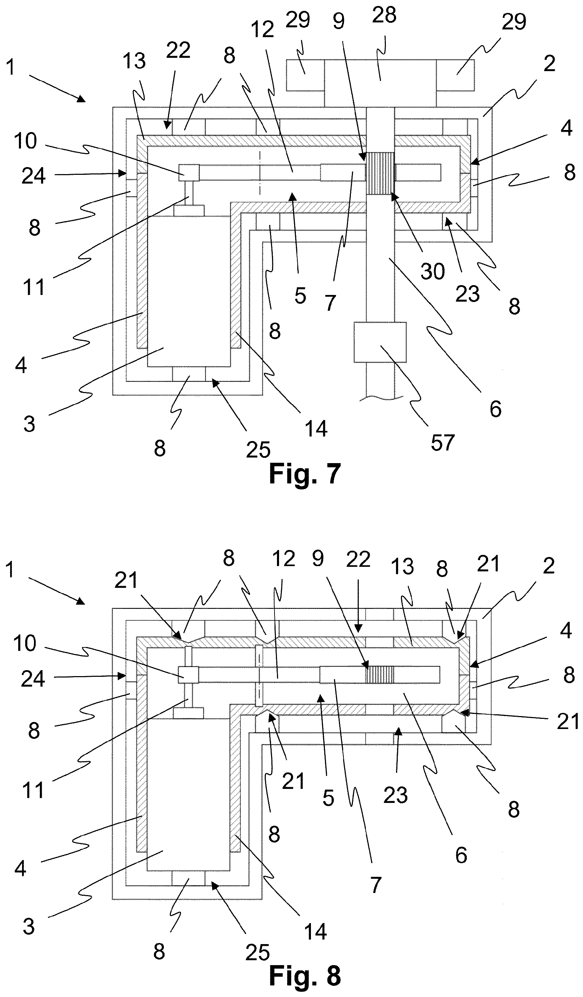

In Figur 7 ist ein zweites weiteres Ausführungsbeispiel des Aktuators 1 dargestellt. In diesem Ausführungsbeispiel ist das Rotationselement 6 als Gewindespindel 55 ausgebildet. Das Rotationselement 6 weist in diesem Fall einen Verzahnungsabschnitt 30 mit einer Außenverzahnung auf. Das Rotationselement 6 ist in einem Spindellager 28 gelagert. Das Spindellager 28 ist an dem Gehäuse 2 des Aktuators 1 angeordnet und insbesondere fest mit diesem verbunden. Das Spindellager 28 weist in diesem Ausführungsbeispiel zwei Anschlussstücke 29 auf, mit denen das Spindellager 28 und damit mittelbar der Aktuator 1 an einer nicht dargestellten Lenksäule befestigt werden kann.

Die gewünschte Translationsbewegung wird in diesem Ausführungsbeispiel durch die Rotation des als Gewindespindel 55 ausgebildeten Rotationselements 6 und einer auf dem Rotationselement 6 entlanglaufenden Spindelmutter 57 erzeugt. Das Rotationselement 6 weist ein nicht dargestelltes und insbesondere als Trapezgewinde ausgebildetes Außengewinde 56 auf. Die Spindelmutter 57 weist ein korrespondierendes Innengewinde 58 auf.

In Figur 8 ist ein drittes weiteres Ausführungsbeispiel des Aktuators 1 dargestellt. Auf die Darstellung des Rotationselements 6 wurde in dieser Figur der Übersichtlichkeit halber verzichtet. Das Rotationselement 6 in diesem Ausführungsbeispiel des Aktuators 1 ist allerdings ebenfalls als Gewindespindel 55 ausgebildet. Das Abtriebsrad 7 weist in der Aussparung 9 eine Innenverzahnung auf, mittels der das Rotationselement 6 angetrieben werden kann.

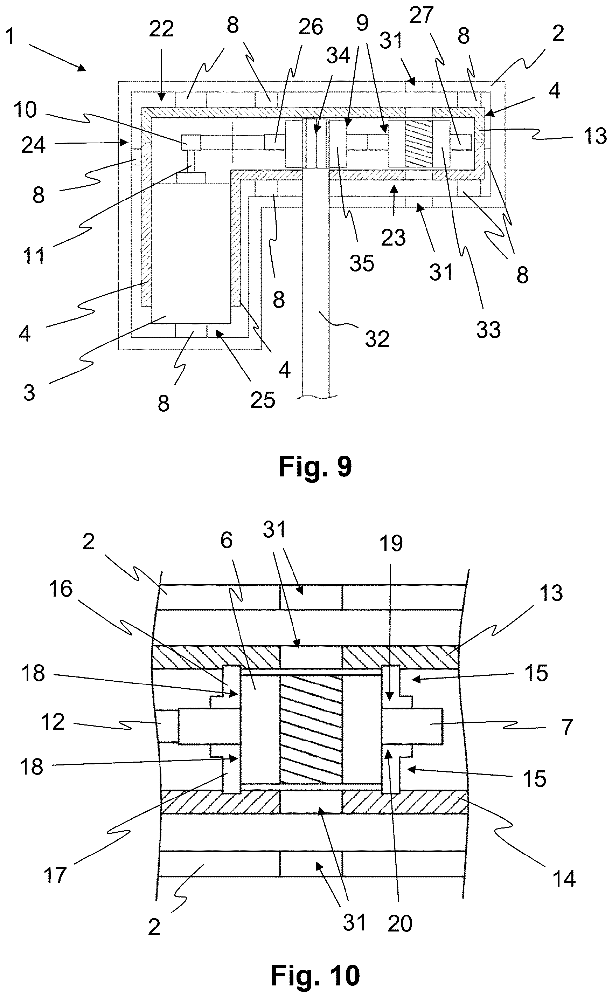

Zumindest ein Teil der Entkopplungselemente 8 weist in diesem Ausführungsbeispiel eine abgeschrägte Anlagefläche 21 auf. Hierdurch wird die Übertragung von Vibrationen von dem Träger 4 an das Gehäuse 2 noch effizienter unterdrückt. Die abgeschrägten Anlageflächen 21 sind in dieser Draufsicht bzw. zweidimensionalen Projektion beispielsweise dreieckig ausgebildet. Der Träger 4 kann für die Anlageflächen 21 formschlüssige Ausnehmungen aufweisen. Das erste Zahnrad 10 weist in diesem Ausführungsbeispiel einen zusätzlichen Lagerpunkt im Träger 4, insbesondere im ersten Trägerelement 13 auf. Das zweite Zahnrad 12 ist vollständig im Träger 4 gelagert, wobei jeweils ein Lagerpunkt im ersten Trägerelement 13 und dem zweiten Trägerelement 14 vorgesehen ist. Das Abtriebsrad 7 ist beispielsweise mittelbar durch das Rotationselement 6 im Träger 4 gelagert, was in Figur 10 deutlicher dargestellt ist.

Die Figur 9 stellt ein Ausführungsbeispiel des Aktuators 1 dar, bei dem mehrere Rotationselemente 6 vorgesehen sind. Entsprechend ist ein erstes Abtriebsrad 26 für ein erstes Rotationselement 32 und ein zweites Abtriebsrad 27 für ein zweites Rotationselement 33 vorgesehen. Die Abtriebsräder 26, 27 sind insbesondere mittels Außenverzahnungen formschlüssig und drehmomentübertragend verbunden. Die Abtriebsräder 26, 27 sind beispielsweise in einer Ebene angeordnet, insbesondere in einer gemeinsamen Ebene mit dem ersten Zahnrad 10 und dem zweiten Zahnrad 12. Die Rotationsachsen der Zahnräder 10, 12 und der Abtriebsräder 26, 27 sind beispielsweise parallel zueinander.

Die Rotationselemente 32, 33 sind in Aussparungen 9 der Abtriebsräder 26, 27 angeordnet. Die Rotationselemente 32, 33 können insbesondere unterschiedlich ausgebildet sein. In diesem Ausführungsbeispiel ist das erste Rotationselement 32 als Gewindespindel 55 mit einem Formschlusselement 34 ausgebildet. Das Formschlusselement 34 ist beispielsweise als Mehrkant-Außenfläche ausgebildet. Das Formschlusselement 34 ist insbesondere eine hexagonale Sechskant-Außenfläche. Zwischen dem ersten Rotationselement 32 und dem ersten Abtriebsrad 26 ist beispielsweise eine Buchse 35 angeordnet, die ein nicht dargestelltes zu dem Formschlusselement 34 des ersten Rotationselements 32 korrespondierendes Formschlusselement 34 aufweist. Dieses ist beispielsweise als Mehrkant-Innenfläche, insbesondere Sechskant-Innenfläche ausgebildet. Das zweite Rotationselement 33 ist beispielsweise als Spindelmutter 57 ausgebildet, wobei in dieser Darstellung das insbesondere als Trapezgewinde ausgebildete Innengewinde 58 des zweiten Rotationselements 33 dargestellt ist.

Das zweite Rotationselement 33 ist insbesondere ausgebildet, durch das Innengewinde 58 eine nicht dargestellte Gewindespindel 55 translatorisch anzutreiben. Im Träger 4 von dem Gehäuse 2 befinden sich Öffnungen 31, durch die die Gewindespindeln 55 in den Aktuator 1 eingeführt werden können. Die zu dem ersten Rotationselement 32 korrespondierenden Öffnungen 31 sind beispielsweise nur im zweiten Trägerelement 14 und einer Unterseite des Gehäuses 2 angeordnet. Die zu dem zweiten Rotationselement 33 korrespondierenden Öffnungen 31 sind beispielsweise symmetrisch im ersten Trägerelement 13 und zweiten Trägerelement 14 und an einer Oberseite und der Unterseite des Gehäuses 2 angeordnet. Es ist denkbar, dass ein oder mehrere Entkopplungselemente 8 symmetrisch um eine oder mehrere der Öffnungen 31 angeordnet sind. Dies führt zu einer verbesserten Stabilität im Bereich der Öffnungen 31, an denen Entkopplungselemente 8 angeordnet sind. Das Entkopplungselement 8, das einer Öffnung 31 zugeordnet ist, kann beispielsweise ringförmig ausgebildet sein.

Figur 10 zeigt einen vergrößerten Ausschnitt eines Bereichs um ein Rotationselement 6 und ein Abtriebsrad 7. Hier soll eine mögliche Lagerung 15 des Abtriebsrads 7 und des Rotationselements 6 dargestellt werden. Die Lagerung 15 weist ein erstes Lagerelement 16 und ein zweites Lagerelement 17 auf. Die Lagerelemente 16, 17 sind beispielsweise als Gleitlagerbuchsen ausgebildet. Das erste Lagerelement 16 ist zumindest teilweise im ersten Trägerelement 13 angeordnet. Das zweite Lagerelement 17 ist zumindest teilweise im zweiten Trägerelement 14 angeordnet. Die Lagerelemente 16, 17 umschließen das Rotationselement 6 und/oder das Abtriebsrad 7 beispielsweise ringförmig. Das Rotationselement 6 weist für jedes der Lagerelemente 16, 17 einen Lagerabschnitt 18 auf.

Das erste Lagerelement 16 ist ebenfalls an einer ersten Abtriebsradstirnseite 19 angeordnet. Das zweite Lagerelement 17 ist an einer zweiten Abtriebsradstirnseite 20 angeordnet. Das Abtriebsrad 7 und das Rotationselement 6 sind gemeinsam durch die Lagerung 15 gelagert. Das Rotationselement 6 ist in diesem Ausführungsbeispiel erneut als Spindelmutter 57 mit einem Innengewinde 58 ausgebildet.

Die vorliegende Erfindung ist nicht auf die dargestellten und beschriebenen Ausführungsbeispiele beschränkt. Abwandlungen im Rahmen der Patentansprüche sind möglich, wobei die Erfindung in den angehängten Ansprüchen definiert ist.

### Bezugszeichenliste

- 1: Aktuator
- 2: Gehäuse
- 3: Motor
- 4: Träger
- 5: Getriebe
- 6: Rotationselement
- 7: Abtriebsrad
- 8: Entkopplungselementen
- 9: Aussparung
- 10: erstes Zahnrad
- 11: Abtriebswelle
- 12: zweites Zahnrad
- 13: ersten Trägerelement
- 14: zweiten Trägerelement
- 15: Lagerung
- 16: erstes Lagerelement
- 17: zweites Lagerelement
- 18: Lagerabschnitt
- 19: ersten Abtriebsradstirnseite
- 20: zweiten Abtriebsradstirnseite
- 21: Anlagefläche
- 22: ersten Trägerstirnseite
- 23: zweiten Trägerstirnseite
- 24: Trägermantelfläche
- 25: Ende
- 26: erstes Abtriebsrad
- 27: zweites Abtriebsrad
- 28: Spindellager
- 29: Anschlussstück
- 30: Verzahnungsabschnitt
- 31: Öffnung
- 32: erstes Rotationselement
- 33: zweites Rotationselement
- 34: Formschlusselement
- 35: Buchse
- 50: Lenksäule
- 51: Trageinheit
- 52: Aufnahmeeinheit
- 53: Lenkspindel
- 54: Schraubengetriebe
- 55: Gewindespindel
- 56: Außengewinde
- 57: Spindelmutter
- 58: Innengewinde
- 59: erste Einzelmutter
- 60: zweite Einzelmutter
- 61: Aufnahmeelement
- 62: Endabschnitt
- 63: Abflachung
- 64: Verprägung
- 65: Verbindungselement
- 66: Ausnehmung
- 67: Arretierungselement
- 68: Langloch
- 69: Schraubloch
- 70: Aufnahmeaussparung
- 71: Einzelmutterführung
- 72: Führungsaussparung
- 73: Führungsfortsatz
- 74: erster Anlagebereich
- 75: zweiter Anlagebereich
- 76: freies Ende
- 77: Boden

- SA: Spindelachse
- L: Längsrichtung

## Patentansprüche

1. Aktuator (1), insbesondere Lenksäulenaktuator für eine Lenksäule (50) eines Kraftfahrzeugs,
mit einem Motor (3) und
wenigstens einem vom Motor (3) antreibbaren Schraubengetriebe (54),
das eine Gewindespindel (55) mit einem Außengewinde (56) und eine mit der Gewindespindel (55) korrespondierende Spindelmutter (57) aufweist,
wobei die Spindelmutter (57) zwei Einzelmuttern (59, 60) mit einem jeweiligen Innengewinde (58) aufweist, und
wobei die Einzelmuttern (59, 60) um eine Spindelachse (SA) der Gewindespindel (55) relativ zueinander aus einer Montagestellung in eine Betriebsstellung verdrehbar und in dieser Betriebsstellung fixierbar sind, so dass ein Gewindespiel zwischen dem Außengewinde (56) der Gewindespindel (55) und den Innengewinden (58) der Einzelmuttern (59, 60) einstellbar ist,
wobei Spindelmutter (57) wenigstens ein Arretierungselement (67) zum Arretieren der beiden Einzelmuttern (59, 60) in der Betriebsstellung aufweist, **dadurch gekennzeichnet,**
**dass** wenigstens eine der Einzelmuttern (59, 60) ein konzentrisch zur Spindelachse (SA) gekrümmtes Langloch (68) aufweist, durch das sich das Arretierungselement (67) hindurcherstreckt.

2. Aktuator (1) gemäß dem vorangegangenen Anspruch, **dadurch kennzeichnet, dass** die erste Einzelmutter (59) als drehbare Einstellmutter und die zweite Einzelmutter (60) als drehfeste Festmutter ausgebildet ist.

3. Aktuator (1) gemäß einem der vorangegangenen Ansprüche, **dadurch gekennzeichnet, dass** das wenigstens ein Arretierungselement (67) eine Arretierungsschraube ist und/oder
wenigstens eine Einzelmutterführung (71) zum Führen wenigstens einer der Einzelmuttern (59, 60), insbesondere der Einstellmutter, beim Verdrehen um die Spindelachse (SA) aufweist.

4. Aktuator (1) gemäß einem der vorangegangenen Ansprüche, **dadurch gekennzeichnet, dass** die erste Einzelmutter (59) das konzentrisch zur Spindelachse (SA) gekrümmte Langloch (68) aufweist, durch das sich das Arretierungselement (67) hindurcherstreckt.

5. Aktuator (1) gemäß einem der vorangegangenen Ansprüche, **dadurch gekennzeichnet, dass** die beiden Einzelmuttern (59, 60) jeweils wenigstens einen zueinander korrespondierenden Anlagebereich (74, 75) aufweisen,
wobei vorzugsweise wenigstens ein erster Anlagebereich (74) der ersten Einzelmutter (59) zumindest teilweise an wenigstens einem zweiten Anlagebereich (75) der zweiten Einzelmutter (60) anliegt.

6. Aktuator (1) gemäß Anspruch 5, **dadurch gekennzeichnet, dass** der wenigstens eine erste Anlagebereich (74) der ersten Einzelmutter (59) als unterbrechungsfreier Ring und/oder um die Spindelachse (SA) umlaufend zusammenhängend ausgebildet ist und/oder
der wenigstens eine zweite Anlagebereich (75) der zweiten Einzelmutter (60) mehrere Teilsegmente umfasst, die durch Ausnehmungen (66) voneinander getrennt sind.

7. Aktuator (1) gemäß einem der vorangegangenen Ansprüche, **dadurch gekennzeichnet, dass** das wenigstens eine Arretierungselement (67), insbesondere im zweiten Anlagebereich (75), an der zweiten Einzelmutter (60) befestigt ist,
wobei vorzugsweise das wenigstens eine als Arretierungsschraube ausgebildete Arretierungselement (67) in ein Schraubloch (69) des wenigstens einen zweiten Anlagebereichs (75) eingeschraubt ist.

8. Aktuator (1) gemäß einem der vorangegangenen Ansprüche, **dadurch gekennzeichnet, dass** die Spindelmutter (57) ein Aufnahmeelement (61) umfasst, an dem die beiden Einzelmuttern (59, 60) angeordnet sind,
wobei vorzugsweise die erste Einzelmutter (59) mittelbar über die zweite Einzelmutter (60) mit dem Aufnahmeelement (61) verbunden ist.

9. Aktuator (1) gemäß Anspruch 3, **dadurch gekennzeichnet, dass** die Einzelmutterführung (71) eine Führungsaussparung (72) und einen zu dieser korrespondierenden Führungsfortsatz (73) umfasst, die jeweils an einer der beiden Einzelmuttern (59, 60) ausgebildet sind,
wobei die Führungsaussparung (72) und der korrespondierende Führungsfortsatz (73) vorzugsweise rotationssymmetrisch, insbesondere zylindrisch, ausgebildet und/oder konzentrisch zur Spindelachse (SA) angeordnet sind und/oder
ein freies Ende (76) des Führungsfortsatzes (73) und ein Boden (77) der Führungsaussparung (72) voneinander beabstandet sind.

10. Aktuator (1) gemäß einem der vorangegangenen Ansprüche, **dadurch gekennzeichnet, dass** der Aktuator (1) ein Gehäuse (2) umfasst, wobei die Spindelmutter (57) um die Spindelachse (SA) drehbar und translatorisch fixiert innerhalb des Gehäuses (2) oder
translatorisch entlang der Spindelachse (SA) bewegbar und rotatorisch fixiert außerhalb des Gehäuses (2) angeordnet ist.

11. Aktuator (1) gemäß Anspruch 8, **dadurch gekennzeichnet, dass** die Spindelmutter (57), insbesondere wenigstens eine der Einzelmuttern (59, 60) und/oder das Aufnahmeelement (61), an einer dem Motor (3) zugewandten Seite eine Abflachung (63) aufweist und/oder das Gehäuse (2) im Bereich des Motors (3) eine zur Abflachung (63) der Spindelmutter (57) hin gerichtete Verprägung (64) aufweist.

12. Lenksäule (50) für ein Kraftfahrzeug,
mit einer Trageinheit (51) zum Befestigen der Lenksäule (50) an dem Kraftfahrzeug,
mit einer Aufnahmeeinheit (52) zum drehbar gelagerten Aufnehmen einer Lenkspindel (53), und
mit wenigstens einem Aktuator (1) zum Verstellen der Aufnahmeeinheit (52) relativ zur Trageinheit (51),
**dadurch gekennzeichnet,**
**dass** der wenigstens eine Aktuator (1) gemäß einem oder mehreren der vorangegangenen Ansprüche ausgebildet ist.

13. Lenksäule (50) gemäß dem vorangegangenen Anspruch, **dadurch gekennzeichnet, dass** die Spindelmutter (57) des Aktuators (1) gemäß dem Anspruch 8 mittels des Aufnahmeelements (61), insbesondere drehfest und/oder verschiebefest, an der Trageinheit (51), an der Aufnahmeeinheit (52) und/oder am Gehäuse (2) des Aktuators (1) gemäß dem Anspruch 10 angeordnet ist.

14. Verfahren zum Herstellen und/oder Montieren eines Aktuators (1) gemäß einem oder mehreren der vorherigen Ansprüche 1 bis 11, vorzugsweise eines Lenksäulenaktuator für eine Lenksäule (50) eines Kraftfahrzeugs, das folgende Schritte umfasst:
- Montieren einer Spindelmutter (57) in einer Montagestellung auf einer Gewindespindel (55),
- Einstellen des Gewindespiels des Schraubengetriebes (54) durch Verdrehen wenigstens einer Einzelmutter (59, 60) der Spindelmutter (57) von einer Montagestellung in eine Betriebsstellung, und
- Fixieren der Spindelmutter (57) in der Betriebsstellung.

15. Verfahren gemäß dem vorangegangenen Anspruch, **dadurch gekennzeichnet, dass** vor, während und/oder nach dem Fixieren der Spindelmutter (57) in der Betriebsstellung an wenigstens einer der Einzelmuttern (59, 60) und/oder an einem Aufnahmeelement (61), insbesondere im Bereich des Motors (3), eine Abflachung (63) eingebracht, insbesondere gefräst, wird.

## Claims

1. Actuator (1), in particular steering column actuator for a steering column (50) of a motor vehicle,
having a motor (3) and
at least one helical gear (54) which can be driven by the motor (3), which has a threaded spindle (55) with an external thread (56) and a spindle nut (57) which corresponds to the threaded spindle (55), wherein the spindle nut (57) has two individual nuts (59, 60) with a respective internal thread (58), and
wherein the individual nuts (59, 60) can be rotated relative to one another about a spindle axis (SA) of the threaded spindle (55) from a mounted position into an operative position and can be fixed in this operative position, with the result that a thread play between the external thread (56) of the threaded spindle (55) and the internal threads (58) of the individual nuts (59, 60) can be set,
wherein
the spindle nut (57) has at least one locking element (67) for locking the two individual nuts (59, 60) in the operative position, **characterized in that**
at least one of the individual nuts (59, 60) has an elongated hole (68) which is curved concentrically with respect to the spindle axis (SA) and through which the locking element (67) extends.

2. Actuator (1) according to the preceding claim, **characterized in that** the first individual nut (59) is designed as a rotatable adjusting nut and the second individual nut (60) is designed as a fixed nut which is fixed in terms of rotation.

3. Actuator (1) according to one of the preceding claims, **characterized in that** the at least one locking element (67) is a locking screw and/or has at least one individual nut guide (71) for guiding at least one of the individual nuts (59, 60), in particular the adjusting nut, during twisting about the spindle axis (SA).

4. Actuator (1) according to one of the preceding claims, **characterized in that** the first individual nut (59) has the elongated hole (68) which is curved concentrically with respect to the spindle axis (SA) and through which the locking element (67) extends.

5. Actuator (1) according to one of the preceding claims, **characterized in that** the two individual nuts (59, 60) each have at least one contact region (74, 75) which corresponds to one another,
wherein preferably at least one first contact region (74) of the first individual nut (59) bears at least partially against at least one second contact region (75) of the second individual nut (60).

6. Actuator (1) according to claim 5, **characterized in that** the at least one first contact region (74) of the first individual nut (59) is designed as a continuous ring which is free of interruptions and/or runs around the spindle axis (SA), and/or
the at least one second contact region (75) of the second individual nut (60) comprises a plurality of part segments which are separated from one another by recesses (66).

7. Actuator (1) according to one of the preceding claims, **characterized in that** the at least one locking element (67) is fastened to the second individual nut (60), in particular in the second contact region (75), wherein preferably the at least one locking element (67) which is designed as a locking screw is screwed into a screw hole (69) of the at least one second contact region (75).

8. Actuator (1) according to one of the preceding claims, **characterized in that** the spindle nut (57) comprises a receiving element (61) on which the two individual nuts (59, 60) are arranged,
wherein preferably the first individual nut (59) is connected indirectly to the receiving element (61) via the second individual nut (60).

9. Actuator (1) according to claim 3, **characterized in that** the individual nut guide (71) comprises a guide recess (72) and a guide protrusion (73) which corresponds thereto and which are each formed on one of the two individual nuts (59, 60),
wherein the guide recess (72) and the corresponding guide protrusion (73) are preferably formed rotationally symmetrically, in particular cylindrically, and/or are arranged concentrically with respect to the spindle axis (SA), and/or
a free end (76) of the guide protrusion (73) and a base (77) of the guide recess (72) are spaced apart from one another.

10. Actuator (1) according to one of the preceding claims, **characterized in that** the actuator (1) comprises a housing (2),
wherein the spindle nut (57) can be rotated about the spindle axis (SA) and is fixed in terms of translation within the housing (2), or
can be moved in terms of translation along the spindle axis (SA) and is fixed in terms of rotation outside the housing (2).

11. Actuator (1) according to Claim 8, **characterized in that** the spindle nut (57), in particular at least one of the individual nuts (59, 60) and/or the receiving element (61), has a flattening (63) on a side which faces the motor (3), and/or
the housing (2) has, in the region of the motor (3), an embossing (64) which is directed towards the flattening (63) of the spindle nut (57).

12. Steering column (50) for a motor vehicle,
having a support unit (51) for fastening the steering column (50) to the motor vehicle,
having a receiving unit (52) for receiving a steering spindle (53) in a rotatably mounted manner, and
having at least one actuator (1) for adjusting the receiving unit (52) relative to the support unit (51),
**characterized in that**
the at least one actuator (1) is designed according to one or more of the preceding claims.

13. Steering column (50) according to the preceding claim, **characterized in that** the spindle nut (57) of the actuator (1) according to claim 8 is arranged on the support unit (51), on the receiving unit (52) and/or on the housing (2) of the actuator (1) according to claim 10 by means of the receiving element (61), in particular in a manner which is fixed in terms of rotation and/or in terms of displacement.

14. Method for producing and/or mounting an actuator (1) according to one or more of the preceding claims 1 to 11, preferably a steering column actuator for a steering column (50) of a motor vehicle, which method comprises the following steps:
- mounting a spindle nut (57) in a mounted position on a threaded spindle (55),
- setting the thread play of the helical gear (54) by twisting at least one individual nut (59, 60) of the spindle nut (57) from a mounted position into an operative position, and
- fixing the spindle nut (57) in the operative position.

15. Method according to the preceding claim, **characterized in that**, before, during and/or after the fixing of the spindle nut (57) in the operative position, a flattening (63) is introduced, in particular milled, on at least one of the individual nuts (59, 60) and/or on a receiving element (61), in particular in the region of the motor (3).

## Revendications

1. Actionneur (1), en particulier actionneur de colonne de direction pour une colonne de direction (50) d'un véhicule automobile,
comprenant un moteur (3) et
au moins un engrenage à vis (54) pouvant être entraîné par le moteur (3),
qui présente une broche filetée (55) avec un filetage extérieur (56) et un écrou de broche (57) correspondant à la broche filetée (55), l'écrou de broche (57) présentant deux écrous individuels (59, 60) avec un filetage intérieur respectif (58), et
les écrous individuels (59, 60) pouvant tourner l'un par rapport à l'autre autour d'un axe de broche (SA) de la broche filetée (55) d'une position de montage dans une position opérationnelle et pouvant être fixés dans cette position opérationnelle, de sorte qu'un jeu de filetage entre le filetage extérieur (56) de la broche filetée (55) et les filetages intérieurs (58) des écrous individuels (59, 60) puisse être ajusté, dans lequel
l'écrou de broche (57) présente au moins un élément de blocage (67) pour bloquer les deux écrous individuels (59, 60) dans la position opérationnelle, **caractérisé en ce**
**qu'**au moins l'un des écrous individuels (59, 60) présente un trou allongé (68) courbé de manière concentrique par rapport à l'axe de broche (SA), à travers lequel s'étend l'élément de blocage (67).

2. Actionneur (1) selon la revendication précédente, **caractérisé en ce que** le premier écrou individuel (59) est réalisé sous forme d'écrou d'ajustage rotatif et le deuxième écrou individuel (60) est réalisé sous forme d'écrou fixe solidaire en rotation.

3. Actionneur (1) selon l'une quelconque des revendications précédentes, **caractérisé en ce que** l'au moins un élément de blocage (67) est une vis de blocage et/ou
présente au moins un guide d'écrou individuel (71) pour guider au moins l'un des écrous individuels (59, 60), en particulier l'écrou d'ajustage, lors de tourner autour de l'axe de broche (SA).

4. Actionneur (1) selon l'une quelconque des revendications précédentes, **caractérisé en ce que** le premier écrou individuel (59) présente le trou allongé (68) courbé de manière concentrique par rapport à l'axe de broche (SA), à travers lequel s'étend l'élément de blocage (67).

5. Actionneur (1) selon l'une quelconque des revendications précédentes, **caractérisé en ce que** les deux écrous individuels (59, 60) présentent à chaque fois au moins une région d'appui (74, 75) correspondant l'une à l'autre,
dans lequel de préférence au moins une première région d'appui (74) du premier écrou individuel (59) s'applique au moins en partie contre au moins une deuxième région d'appui (75) du deuxième écrou individuel (60).

6. Actionneur (1) selon la revendication 5, **caractérisé en ce que** l'au moins une première région d'appui (74) du premier écrou individuel (59) est réalisée sous forme d'anneau sans interruption et/ou de manière continue tout autour de l'axe de broche (SA) et/ou
l'au moins une deuxième région d'appui (75) du deuxième écrou individuel (60) comprend plusieurs segments partiels qui sont séparés les uns des autres par des évidements (66).

7. Actionneur (1) selon l'une quelconque des revendications précédentes, **caractérisé en ce que** l'au moins un élément de blocage (67) est fixé, en particulier dans la deuxième région d'appui (75), au deuxième écrou individuel (60),
dans lequel de préférence l'au moins un élément de blocage (67) réalisé sous forme de vis de blocage est vissé dans un trou de vis (69) de l'au moins une deuxième région d'appui (75).

8. Actionneur (1) selon l'une quelconque des revendications précédentes, **caractérisé en ce que** l'écrou de broche (57) comprend un élément de réception (61) sur lequel sont disposés les deux écrous individuels (59, 60),
dans lequel de préférence le premier écrou individuel (59) est connecté indirectement par le biais du deuxième écrou individuel (60) à l'élément de réception (61).

9. Actionneur (1) selon la revendication 3, **caractérisé en ce que** le guide d'écrou individuel (71) comprend un évidement de guidage (72) et un prolongement de guidage (73) correspondant à celui-ci, qui sont réalisés à chaque fois sur l'un des deux écrous individuels (59, 60),
dans lequel l'évidement de guidage (72) et le prolongement de guidage correspondant (73) sont réalisés de préférence de manière symétrique en rotation, en particulier de manière cylindrique, et/ou sont disposés de manière concentrique par rapport à l'axe de broche (SA) et/ou
une extrémité libre (76) du prolongement de guidage (73) et un fond (77) de l'évidement de guidage (72) sont espacés l'un de l'autre.

10. Actionneur (1) selon l'une quelconque des revendications précédentes, **caractérisé en ce que** l'actionneur (1) comprend un boîtier (2), dans lequel l'écrou de broche (57) peut tourner autour de l'axe de broche (SA) et est fixé en translation à l'intérieur du boîtier (2) ou
est disposé de manière mobile en translation le long de l'axe de broche (SA) et est fixé en rotation à l'extérieur du boîtier (2).

11. Actionneur (1) selon la revendication 8, **caractérisé en ce que** l'écrou de broche (57), en particulier au moins l'un des écrous individuels (59, 60) et/ou l'élément de réception (61), présente un méplat (63) sur un côté tourné vers le moteur (3) et/ou
le boîtier (2) présente dans la région du moteur (3) un estampage (64) orienté vers le méplat (63) de l'écrou de broche (57).

12. Colonne de direction (50) pour un véhicule automobile,
comprenant une unité de support (51) pour fixer la colonne de direction (50) au véhicule automobile,
comprenant une unité de réception (52) pour recevoir une broche de direction (53) montée de manière rotative, et
comprenant au moins un actionneur (1) pour ajuster l'unité de réception (52) par rapport à l'unité de support (51),
**caractérisée en ce que**
l'au moins un actionneur (1) est réalisé selon l'une quelconque ou plusieurs des revendications précédentes.

13. Colonne de direction (50) selon la revendication précédente, **caractérisée en ce que** l'écrou de broche (57) de l'actionneur (1) selon la revendication 8 est disposé au moyen de l'élément de réception (61), en particulier de manière solidaire en rotation et/ou de manière solidaire en coulissement, sur l'unité de support (51), sur l'unité de réception (52) et/ou sur le boîtier (2) de l'actionneur (1) selon la revendication 10.

14. Procédé pour fabriquer et/ou monter un actionneur (1) selon l'une quelconque ou plusieurs des revendications précédentes 1 à 11, de préférence un actionneur de colonne de direction pour une colonne de direction (50) d'un véhicule automobile, comprenant les étapes suivantes consistant à :
- monter un écrou de broche (57) dans une position de montage sur une broche filetée (55),
- régler le jeu de filetage de l'engrenage à vis (54) en faisant tourner au moins un écrou individuel (59, 60) de l'écrou de broche (57) d'une position de montage dans une position opérationnelle, et
- fixer l'écrou de broche (57) dans la position opérationnelle.

15. Procédé selon la revendication précédente, **caractérisé en ce qu'**avant, pendant et/ou après fixer l'écrou de broche (57) dans la position opérationnelle, un méplat (63) est réalisé, en particulier fraisé, sur au moins l'un des écrous individuels (59, 60) et/ou sur un élément de réception (61), en particulier dans la région du moteur (3).
